Europäisches Patentamt

European Patent Office

Office européen des brevets

(19)

(11) Veröffentlichungsnummer : **0 103 780**
**B1**

(12) **EUROPÄISCHE PATENTSCHRIFT**

(45) Veröffentlichungstag der Patentschrift :
**19.08.87**

(21) Anmeldenummer : **83108416.5**

(22) Anmeldetag : **26.08.83**

(51) Int. Cl.⁴ : **G 01 C 15/04**

(54) **Unterflurmarke, Verfahren zu deren Herstellung und Verfahren zu deren Einbringung in das Erdreich.**

(30) Priorität : **27.08.82 DE 3231870**

(43) Veröffentlichungstag der Anmeldung :
**28.03.84 Patentblatt 84/13**

(45) Bekanntmachung des Hinweises auf die Patenterteilung : **19.08.87 Patentblatt 87/34**

(84) Benannte Vertragsstaaten :
**AT BE CH DE FR GB IT LI LU NL SE**

(56) Entgegenhaltungen :
**WO-A-83 /013 06**
**DE-A-  855 724**
**US-A- 3 836 842**

(73) Patentinhaber : **Ebinger, Klaus**
**Hansestrasse 13**
**D-5000 Köln 90 (Porz) (DE)**

(72) Erfinder : **Ebinger, Klaus**
**Hansestrasse 13**
**D-5000 Köln 90 (Porz) (DE)**

(74) Vertreter : **Berkenfeld, Helmut, Dipl.-Ing.**
**An der Schanz 2**
**D-5000 Köln 60 (DE)**

# Beschreibung

## Gebiet der Erfindung

Die Erfindung betrifft Unterflurmarken zum Erleichtern des Auffindens und der Lagebestimmung von unter der Oberfläche befindlichen Orten und Gegenständen, insbesondere für geodätische Zwecke. Die Erfindung betrifft weiter ein Verfahren zum Herstellen einer Unterflurmarke. Schließlich betrifft die Erfindung auch ein Verfahren zum Einbringen einer Unterflurmarke in das Erdreich.

## Vorgeschichte der Erfindung

In der Geodäsie, in der Landvermessung und auf anderen Gebieten besteht die Aufgabe, einen Ort genau festzulegen und diesen Ort auch wiederauffindbar zu machen. Ein bekanntes hierzu schon seit Jahrhunderten verwendetes Mittel ist der Grenzstein. Bei diesem Grenzstein besteht aber besonders in der heutigen Zeit die Gefahr, daß er durch Fahrzeuge oder bei Bauarbeiten beschädigt, umgeworfen oder zugeschüttet wird. Ebenso kann ein Grenzstein ganz bewußt umgesetzt werden. Um die vermessenen Orte trotzdem wiederzufinden, ist man auch schon dazu übergegangen, unter dem Grenzstein oder in einer ganz bestimmten Lage zu diesem einen Gegenstand in das Erdreich einzubringen, zum Beispiel bis auf eine bestimmte Tiefe in das Erdreich hineinzudrücken. Dieser Gegenstand kann dann nur durch Graben wiedergefunden werden. Dies ist eine sehr mühevolle, viel Zeit kostende und häufig auch erfolglose Arbeit.

Der Erfinder ist nun auf den Gedanken gekommen, sich der Mittel und Erkenntnisse der modernen Elektrotechnik zu bedienen. Es müßte möglich sein, den in das Erdreich eingebrachten Gegenstand so auszugestalten, daß er mit einem Suchgerät (Stichwort : Mienensuchgerät !) leicht wieder aufzufinden ist.

Zum Erleichtern des Auffindens von verschütteten, zum Beispiel unter einer Lawine begrabenen Skifahrern hat man bereits Erkennungsmarken gebaut, die die Skifahrer an ihrem Körper mitführen (DE-AS 1 473 763). Bei dieser Erkennungsmarke handelt es sich im wesentlichen um eine große in Kunststoff eingebettete Rahmenspule. Diese bildet einen passiven Schwingkreis. Beim Anpeilen der Rahmenspule mit einem Sender wird diesem Energie entzogen. Es entsteht eine negative Amplitude. Aus dieser kann man auf die Lage der und die Entfernung zur Rahmenspule und damit zu der verschütteten Person schließen. Bekannt ist auch ein Verfahren zum Auffinden von Verschütteten (DE-PS 1 249 416), bei dem ein Sender in Bestimmter Art betrieben und mit diesem ein vor der verschütteten Person getragener elektromagnetischer Schwingkreis angepeilt und zu Eigenschwingungen angeregt wird. Der Sender wird periodisch abgeschaltet. In den Sendepausen werden die Schwingungen gemessen, die von dem von der verschütteten Person getragenen Schwingkreis abgegeben werden. Für die erfindungsgemäßen Zwecke in der Geodäsie eignen sich diese bekannten Einrichtungen und Verfahren nicht.

Bekannt ist weiter eine in das Erdreich einzubringende Markierungsvorrichtung (US-PS 3 836 842). Sie enthält einen Schwingkreis und wirkt als passives Schaltungselement. Diese Vorrichtung wird im Erdreich in kurzem Abstand unter der Oberfläche angeordnet. Wenn man sich nun einer Stelle, an der eine oder mehrere solcher Vorrichtungen angeordnet sind, mit einem Sender nähert und dieser auf die Frequenz des aus der Spule und dem Kondensator bestehenden Schwingkreises abgestimmt ist, wird er besonders bedämpft. Dies läßt sich feststellen. Damit wird die Lage der Vorrichtung erkannt.

## Kurze Beschreibung der Erfindung

Der Erfindung liegt die Aufgabe zugrunde, eine Unterflurmarke so auszubilden, daß ihre Lage besonders genau erkannt werden kann. Dies bedingt unter anderem, daß der Schwingkreis einfach und genau auf eine Sollfrequenz abgestimmt werden kann. Bei einem genauen Abstimmen auf und Einhalten einer Sollfrequenz läßt sich die erfindungsgemäße Unterflurmarke auch zum selbsttätigen Führen oder Lenken von Fahrzeugen verwenden. Hierzu wird sie im Boden einer Fabrik- oder Lagerhalle oder in einer Fahrstraße verlegt. Mehrere Unterflurmarken werden entlang eines von den Fahrzeugen zu fahrenden Weges verlegt. In den Fahrzeugen befinden sich Sender, die die Unterflurmarken erkennen. Diese Sender greifen dann so in den Lenkung der Fahrzeuge ein, daß diese entlang des mit den Unterflurmarken markierten Weges fahren.

Dies wird durch eine Ausbildung nach dem Anspruch 1 oder Anspruch 2 gelöst. Ein Verfahren zum Herstellen ist im Anspruch 12 und ein Verfahren zum Einbringen im Anspruch 13 angegeben.

Das Gehäuse kann nach dem Fixieren der Spule auf dem Kern und nach dem Fixieren des Kondensators mit einem Kunstharz ausgegossen werden. Statt des Vergießens mit Kunstharz kann der Kern in einer zweckmäßigen Ausgestaltung auch durch auf seine Enden aufgesetzte Gummiringe im Gehäuse fixiert werden. Für diesen Fall empfiehlt sich ein Verschließen des oberen offenen Endes des Gehäuses durch einen eingeschobenen Stopfen.

Das Gehäuse selbst weist in einer weiteren Ausgestaltung die Form eines Hohlzylinders mit einem auf dessen unteres Ende aufgesetzten Kegel auf. Ein solches Gehäuse läßt sich einfach herstellen und mit der Spitze des Kegels einfach und mit geringem Kraftaufwand bis zur gewünschten Tiefe in das Erdreich einschieben.

In Abhängigkeit von der Entfernung, aus der die Unterflurmarke aufgefunden bzw. der in dieser enthaltene Schwingkreis zu Eigenschwingungen angeregt werden soll, muß der Kern unterschiedlich lang sein. Das Herstellen von Kernen unterschiedlicher Länge bereitet keine besonderen Schwierigkeiten. Anders ist dies bei dem aus einem Kunststoff gespritzten Gehäuse. Ein Spritzwerkzeug ist sehr aufwendig und damit auch teuer. Um nun die Herstellung eines langen Gehäuses zum Aufnehmen eines langen Kernes zu vereinfachen, ist in einer zweckmäßigen Ausgestaltung vorgesehen, daß eine Verlängerungshülse in das offene Ende des Gehäuses eingesetzt und der Kern bis in den Bereich der Verlängerungshülse verlängert ist. Zweckmäßig wird die Verlängerungshülse in das Gehäuse eingeklebt. Die Verlängerungshülse gibt damit die Möglichkeit, die Gehäuse mit einem einzigen Spritzwerkzeug in einer Länge herzustellen und gegebenenfalls mit einer Verlängerungshülse zu verlängern.

In einer weiteren Ausgestaltung ist vorgesehen, daß der Kegel an seinem oberen, den größeren Durchmesser aufweisenden Ende zur Bildung eines treppenförmigen Absatzes einen größeren Durchmesser als das Gehäuse aufweist. Auf diesen Absatz können von oben zum Einschieben des Gehäuses in das Erdreich Einrichtungen oder Werkzeuge aufgesetzt werden.

In einer weiteren Ausgestaltung ist vorgesehen, daß das Gehäuse auf seiner Außenseite über seinen Umfang verteilt Rippen aufweist. Durch diese Rippen wird das Gehäuse mechanisch gefestigt. Gleichzeitig können mit einer unterschiedlichen Formgebung der Rippen auch Unterflurmarken, die zum Beispiel voneinander abweichende elektrische Werte aufweisen, kenntlich gemacht und unterschieden werden. Dem gleiche Zweck dient eine weitere Maßnahme, gemäß der die Rippen und das Gehäuse verschieden eingefärbt sind.

Kurze Beschreibung der Zeichnungen

Am Beispiel der in der Zeichnung schematisch gezeigten Ausführungsform wird die erfindungsgemäße Unterflurmarke nun weiter beschrieben. In der Zeichnung ist :

Figur 1 eine Seitenansicht der Unterflurmarke, teilweise im Schnitt,

Figur 2 eine schematische Aufsicht,

Figur 3 ein Querschnitt durch die Unterflurmarke,

Figur 4 eine Seitenansicht der Unterflurmarke mit aufgesetztem Treibrohr,

Figur 5 eine Teilaufsicht auf die Unterflurmarke mit aufgesetztem Treibrohr,

Figur 6 eine Seitenansicht einer abgewandelten Ausführungsform des Ferritkernes,

Figur 7 ein Längsschnitt durch das Gehäuse mit eingesetzter Verlängerungshülse und

Figur 8 eine Seitenansicht der Unterflurmarke mit eingesetzter Verlängerungshülse.

Beschreibung der bevorzugten Ausführungsformen

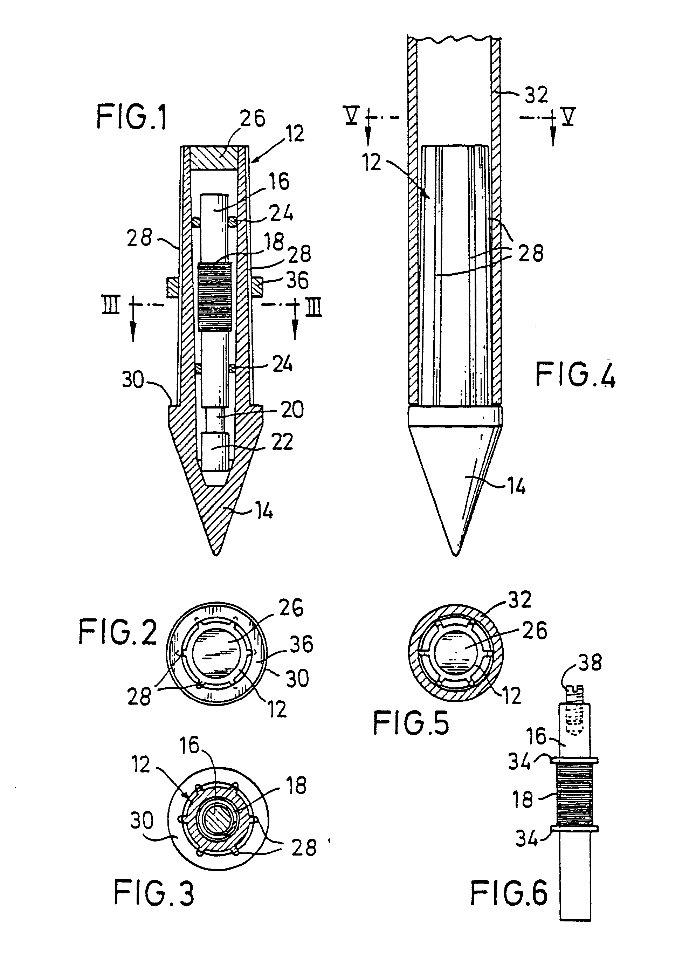

Fig. 1 zeigt das zylinderförmige Gehäuse 12. Auf dessen unteres Ende ist einstückig der Kegel 14 aufgesetzt. Im Gehäuse 12 befindet sich der Ferritkern 16. Auf diesem sitzt die selbsttragende Spule 18. Auf das untere Ende des Ferritkernes 16 ist der Abstandhalter 20 und auf dessen unteres Ende der Kondensator 22 aufgesetzt, gegebenenfalls geklebt. Die Spule 18 und der Kondensator 22 sind, was in einzelnen nicht dargestellt ist, elektrisch miteinander verbunden. In einer Ausführungsform ist der Hohlraum des Gehäuses 12 mit einem Kunstharz vergossen. Dadurch werden der Ferritkern 16, die Spule 18, der Abstandhalter 20 und der Kondensator 22 dicht umschlossen. In einer anderen Ausführungsform werden der Ferritkern 16 mit den an ihm befestigten Teilen durch Gummiringe 24 im Gehäuse fixiert. In diesem Fall wird das Gehäuse 12 mit einem Stopfen 26 verschlossen. Auf seiner Außenseite weist das Gehäuse 12 Rippen 28 auf. Diese können den in der Aufsicht gezeigten halbkreisförmigen Querschnitt oder auch eine andere Form aufweisen. Sie können auch größer als dargestellt sein. Radial überragt der Kegel 14 das Gehäuse 12. Hierdurch entsteht der treppenförmige Absatz 30. Fig. 1 zeigt weiter noch den auf das Gehäuse 12 aufgeschraubten Kurzschlußring 36. Er läßt sich auf- und abschrauben. In derjenigen Stellung, in der der Schwingkreis auf der gewünschten Frequenz schwingt, wird der Kurzschlußring 36 fixiert. In den Figuren 2 und 3 wird die Darstellung nach Fig. 1 weiter erläutert.

Gemäß der Darstellung in den Figuren 4 und 5 steht das Treibrohr 32 mit seinem unteren Ende auf dem Absatz 30 auf. Mit diesem Treibrohr 32 wird die Unterflurmarke in das Erdreich hineingedrückt oder hineingeschlagen. Dabei kann das Treibrohr 32 mit etwas Klemmung auf den Rippen 28 aufsitzen. Falls sich das Treibrohr dann nicht ohne weiteres von den Rippen abziehen läßt, kann die Unterflurmarke mit einem Stock aus dem Treibrohr 32 herausgeschoben werden. Die Unterflurmarke liegt dann frei im Erdreich. Hierbei wird ihr Inneres durch die Rippen 28 geschützt. Falls die Unterflurmarke mit einem Spaten oder irgendeinem Werkzeug berührt wird, können die Rippen 28 sich ohne Beschädigung der elektrischen Teile verformen. Bei sehr hartem oder steinigem Erdreich kann vor dem Einbringen der Unterflurmarke ein Loch geschlagen oder gebohrt werden. Die Unterflurmarke kann auch nach dem bekannten Schachtelhalmprinzip in das Erdreich eingelassen werden. Hierbei sind mehrere Rohre teleskopartig ineinandergeschoben. Durch diese wird die Unterflurmarke in das Erdreich eingeschoben.

Fig. 6 zeigt die Ausführungsform des Ferritkernes 16, bei der zwei Scheiben 34 unter gegenseitigem Abstand auf dem Ferritkern 16 angeordnet sind. Zwischen diese Scheiben 34 wird die Spule 18 Windung für Windung auf den Ferritkern 16 aufgewickelt. Fig. 6 zeigt weiter einen Ferritstab 38. Dieser ist in eine Gewindebohrung an einem Ende des Ferritkernes 16 eingeschraubt. Durch Auf- und Abschrauben des Ferritstabes 38 werden die Länge und damit die Induktivität des Ferritkernes 16 verändert. Auch damit läßt sich die Eigenfrequenz des Schwingkreises einstellen.

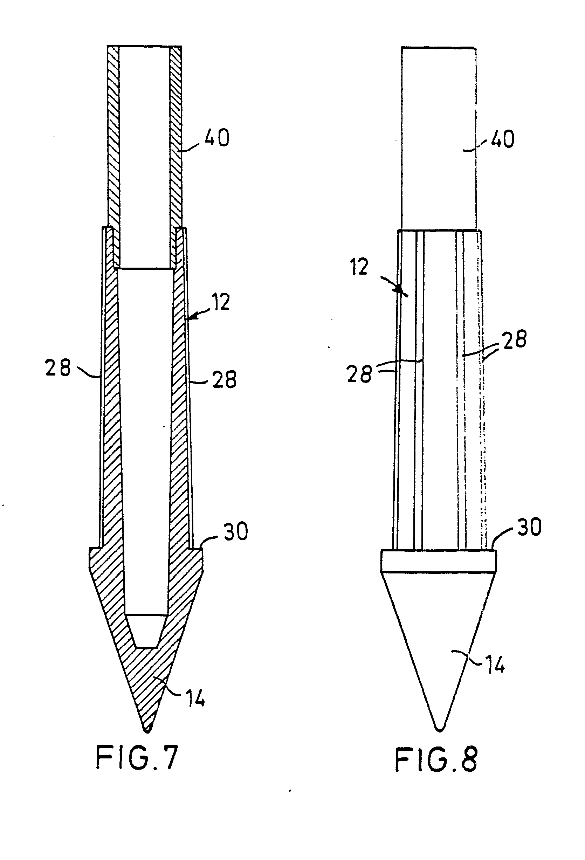

Die Figuren 7 und 8 zeigen die verlängerte Ausführungsform des Gehäuses 12. Hierzu ist in dessen oberes offenes Ende eine Verlängerungshülse 40 eingesetzt. Hierzu wird die Wandstärke am oberen Ende des Gehäuses 12 etwas herabgesetzt. Die Verlängerungshülse 40 wird eingesetzt und zum Beispiel mit einem Kleber fixiert. Fig. 7 läßt erkennen, daß ein in dieses verlängerte Gehäuse einzusetzender Ferritkern 16 wesentlich länger als der nach Fig. 1 ist. Zur Vereinfachung der Darstellung und zur Vermeidung von Wiederholungen sind der Ferritkern 16, die Spule 18 usw. in Fig. 7 nicht eingezeichnet.

Eine im Erdreich liegende Unterflurmarke kann mit einem Funkmeßgerät, allgemein Detektor genannt, geortet werden. Sobald ein solcher Detektor mit seinem Strahlungsbereich eine Unterflurmarke erfaßt, verändert sich seine Schwingungsamplitude. Es sind Detektoren auf dem Markt, bei denen aus der Art der Veränderung der Amplitude genau auf die Entfernung zur und damit auf die Lage der Unterflurmarke geschlossen werden kann. Diese Messungen werden mit der genau auf Sollfrequenz abgestimmten erfindungsgemäßen Unterflurmarke sehr erleichtert. Wie ausgeführt, wird die Unterflurmarke statt oder in der Nähe von Grenzsteinen in das Erdreich eingelassen. Sie kann aber auch zum Markieren von Rohr, und Kabeltrassen verwendet werden. Ebenso kann sie zum Auffinden von verschüttetem Gut, sofern sich dieses in einem unmagnetischen Medium befindet, verwendet werden.

**Patentansprüche**

1. Unterflurmarke zum Erleichtern des Auffindens und der Lagebestimmung von unter der Oberfläche befindlichen Orten und Gegenständen, insbesondere für geodätische Zwecke, mit einem aus einem unmagnetischen Material bestehenden Gehäuse (12) und einem in diesem befindlichen Schwingkreis aus einem stabförmigen Ferritkern (16), einer auf diesem befindlichen Spule (18) und einem elektrisch mit dieser verbundenen Kondensator (22), wobei ein Abstandhalter (20) aus einem unmagnetischen Material an einem Ende des Ferritkernes (16) an diesem befestigt und der Kondensator (22) seinerseits auf dem vom Ferritkern (16) abgewandten Ende des Abstandhalters (20) befestigt ist und wobei auf dem Gehäuse (12) ein metallischer Kurzschlußring (36) einstellbar angeordnet ist.

2. Unterflurmarke zum Erleichtern des Auffindens und der Lagebestimmung von unter der Oberfläche befindlichen Orten und Gegenständen, insbesondere für geodätische Zwecke, mit einem aus einem unmagnetischen Material bestehenden Gehäuse (12) und einem in diesem befindlichen Schwingkreis aus einem stabförmigen Ferritkern (16), einer auf diesem befindlichen Spule (18) und einem elektrisch mit dieser verbundenen Kondensator (22), wobei ein Abstandhalter (20) aus einem unmagnetischen Material an einem Ende des Ferritkernes (16) an diesem befestigt und der Kondensator (22) seinerseits auf dem vom Ferritkern (16) abgewandten Ende des Abstandhalters (20) befestigt ist und wobei ein Ferritstab (38) in eine Gewindebohrung an einem Ende des Ferritkernes (16) einschraubbar ist.

3. Unterflurmarke nach Anspruch 1, dadurch gekennzeichnet, daß das Gehäuse (12) ein Außengewinde und der Kurzschlußring (36) ein Innengewinde aufweist und der Kurzschlußring (36) auf das Gehäuse (12) aufschraubbar ist.

4. Unterflurmarke nach einem der Ansprüche 1 bis 3, dadurch gekennzeichnet, daß der Kern (16) im Gehäuse (12) durch auf seine Enden aufgesetzte Gummiringe (24) fixiert ist.

5. Unterflurmarke nach einem der Ansprüche 1 bis 4, dadurch gekennzeichnet, daß das obere offene Ende des Gehäuses (12) durch einen eingeschobenen Stopfen (26) verschlossen ist.

6. Unterflurmarke nach einem der Ansprüche 1 bis 5, dadurch gekennzeichnet, daß das Gehäuse (12) die Form eines Hohlzylinders mit einem auf dessen unteres Ende aufgesetzten Kegel (14) aufweist.

7. Unterflurmarke nach Anspruch 6, dadurch gekennzeichnet, daß eine Verlängerungshülse (40) in das offene Ende des Gehäuses (12) eingesetzt und der Kern (16) bis in den Bereich der Verlängerungshülse (40) verlängert ist.

8. Unterflurmarke nach Anspruch 7, dadurch gekennzeichnet, daß die Verlängerungshülse (40) eingeklebt ist.

9. Unterflurmarke nach einem der Ansprüche 6 bis 8, dadurch gekennzeichnet, daß der Kegel (14) an seinem oberen, einen größeren Durchmesser aufweisenden Ende zur Bildung eines treppenförmigen Absatzes (30) einen größeren Durchmesser als das Gehäuse (12) aufweist.

10. Unterflurmarke nach Anspruch 7 oder 8, dadurch gekennzeichnet, daß das Gehäuse (12) und die Verlängerungshülse (40) auf ihren Außenseiten über ihren Umfang verteilt Rippen (28) aufweisen.

11. Unterflurmarke nach Anspruch 10, dadurch gekennzeichnet, daß die Rippen (28) und das Gehäuse (12) verschieden eingefärbt sind.

12. Verfahren zum Herstellen einer Unterflurmarke nach den Ansprüchen 4 und 5, wobei ein Abstandhalter (20) auf einem Ende eines stabförmigen Ferritkernes (16) und ein Kondensator (22) auf dem freien Ende des Abstandhalters (20) mit einem Kontaktkleber befestigt werden, eine elektrisch mit dem Kondensator (22) verbundene Spule (18) auf den Kern (16) aufgesetzt und in eine Lage verschoben wird, in der der aus Spule (18) und Kondensator (22) bestehende Schwingkreis auf Sollfrequenz schwingt, die Spule (18) in dieser Lage mit einem Schnellkontaktkleber fixiert wird, das Ganze in ein Gehäuse (12) eingeschoben, der Kern (16) mit auf ihn aufgeschobenen Gummiringen (24) im Gehäuse (12) fixiert, dieses mit einem Stopfen (26) verschlossen und dieser durch einen Klebstoff wasserdicht angeklebt oder durch Ultraschall wasserdicht angeschweißt wird.

13. Verfahren zum Einbringen einer Unterflurmarke nach dem Ansprüchen 1 bis 11 in das Erdreich, wobei ein Treibrohr (32) bis zum Aufsitzen auf einem treppenförmigen Absatz (30) auf ein Gehäuse (12), gegebenenfalls mit Klemmung, aufgeschoben wird, die Unterflurmarke dann mit dem Treibrohr (32) bis zur gewünschten Tiefe in das Erdreich geschoben oder geschlagen und die Unterflurmarke dann mit einem Stock aus der Anlage mit dem Treibrohr (32) herausgedrückt wird.

**Claims**

1. An underground marker to make it easier to find and establish the position of locations and items beneath the surface, in particular for geodetic purposes, having a housing (12) comprising a non-magnetic material and an oscillating circuit disposed in the housing and comprising a bar-like ferrite core (16), a coil (18) on the core, and a capacitor (22) electrically connected to the coil, wherein a spacer (20) comprising a non-magnetic material is fixed to the ferrite core (16) at one end thereof and the capacitor (22) is in turn fixed on the end of the spacer (20) which is remote from the ferrite core (16), and wherein a metal short-circuit ring (36) is arranged adjustably on the housing (12).

2. An underground marker to make it easier to find and establish the position of locations and items beneath the surface, in particular for geodetic purposes, having a housing (12) comprising a non-magnetic material and an oscillating circuit disposed in the housing and comprising a bar-like ferrite core (16), a coil (18) on the core, and a capacitor (22) electrically connected to the coil, wherein a spacer (20) comprising a non-magnetic material is fixed to the ferrite core (16) at one end thereof and the capacitor (22) is in turn fixed on the end of the spacer (20) which is remote from the ferrite core (16), and wherein a ferrite bar (38) can be screwed into a screwthreaded bore at one end of the ferrite core (16).

3. An underground marker according to claim 1 characterised in that the housing (12) has a male screwthread and the short-circuit ring (36) has a female screwthread and the short-circuit ring (36) can be screwed onto the housing (12).

4. An underground marker according to one of claims 1 to 3 characterised in that the core (16) is fixed in the housing (12) by rubber rings (24) which are fitted onto the ends thereof.

5. An underground marker according to one of claims 1 to 4 characterised in that the upper open end of the housing (12) is closed by a plug (26) which is pushed therein.

6. An underground marker according to one of claims 1 to 5 characterised in that the housing (12) is in the form of a hollow cylinder with a cone (14) fitted onto the lower end thereof.

7. An underground marker according to claim 6 characterised in that an extension sleeve (40) is fitted into the open end of the housing (12) and the core (16) is extended into the region of the extension sleeve (40).

8. An underground marker according to claim 7 characterised in that the extension sleeve (40) is glued in position.

9. An underground marker according to one of claims 6 to 8 characterised in that, at its upper end which is of larger diameter, the cone (14) is of larger diameter than the housing (12) to form a step-like reduction (30).

10. An underground marker according to claim 7 or claim 8 characterised in that on their outsides the housing (12) and the extension sleeve (40) have ribs (28) distributed over the periphery thereof.

11. An underground marker according to claim 10 characterised in that the ribs (28) and the housing (12) are of different colours.

12. A process for producing an underground marker according to claims 4 and 5 wherein a spacer (20) is fixed on one end of a bar-like ferrite core (16) and a capacitor (22) is fixed on the free end of the spacer (20) with a contact adhesive, a coil (18) electrically connected to the capacitor (22) is fitted onto the core (16) and moved into a position in which the oscillating circuit comprising the coil (18) and the capacitor (22) oscillates at a desired frequency, the coil (18) is fixed in that position by a quick-setting contact adhesive, the whole assembly is pushed into a housing (12), the core (16) with rubber rings (24) pushed thereonto is fixed in the housing (12), the housing is closed with a plug (26) and the plug is water-tightly glued in position by an adhesive or water-tightly welded in position by ultrasound.

13. A process for introducing an underground marker according to claims 1 to 11 into the ground, wherein a drive tube (32) is pushed onto a housing (12) until it bears against a step-like reduction (30), possibly with a clamping action, the underground marker is then pushed or knocked into the ground to the desired depth therein by the drive tube (32) and the underground marker is then pushed out of the position of contact with the drive tube (32) by means of a stick.

**Revendications**

1. Marque souterraine destinée à faciliter la détection et la localisation de lieux et d'objets situés en dessous de la surface, en particulier à des fins géodésiques, comportant un boîtier (12) en une matière non magnétique et, dans ce boîtier, un circuit oscillant fait d'un noyau de ferrite en forme de barre (16), d'une bobine (18) prévue sur ce noyau et d'un condensateur (22) connecté électriquement à ce noyau, un organe d'espacement (20) en une matière non magnétique étant fixé au noyau de ferrite (16) à une extrémité de celui-ci et le condensateur (22) étant pour sa part fixé sur l'extrémité de l'organe d'espacement (20) opposée au noyau de ferrite (16), tandis qu'une bague de court-circuit métallique (36) est montée réglable sur le boîtier (12).

2. Marque souterraine destinée à faciliter la détection et la localisation de lieux et d'objets situés en dessous de la surface, en particulier à des fins géodésiques, comportant un boîtier (12) en une matière non magnétique et, dans ce boîtier, un circuit oscillant fait d'un noyau de ferrite en forme de barre (16), d'une bobine (18) prévue sur ce noyau et d'un condensateur (22) connecté électriquement à ce noyau, un organe d'espacement (20) en une matière non magnétique étant fixé au noyau de ferrite (16) à une extrémité de celui-ci et le condensateur (22) étant pour sa part fixé sur l'extrémité de l'organe d'espacement (20) opposée au noyau de ferrite (16), tandis qu'un barreau de ferrite (38) peut être vissé dans une forure taraudée dans une extrémité du noyau de ferrite (16).

3. Marque souterraine suivant la revendication 1, caractérisée en ce que le boîtier (12) présente un pas de vis extérieur et la bague de court-circuit (36) un pas de vis intérieur et cette bague de court-circuit (36) peut être vissée sur le boîtier (12).

4. Marque souterraine suivant l'une quelconque des revendications 1 à 3, caractérisée en ce que le noyau (16) est fixé dans le boîtier (12) par des bagues de caoutchouc (24) placées sur ses extrémités.

5. Marque souterraine suivant l'une quelconque des revendications 1 à 4, caractérisée en ce que l'extrémité ouverte supérieure du boîtier (12) est fermée par un bouchon (26) enfoncé en place.

6. Marque souterraine suivant l'une quelconque des revendications 1 à 5, caractérisée en ce que le boîtier (12) a la forme d'un cylindre creux comportant un cône (14) sur son extrémité inférieure.

7. Marque souterraine suivant la revendication 6, caractérisée en ce qu'une douille de prolongement (40) est insérée dans l'extrémité ouverte du boîtier (12) et le noyau (16) est prolongé jusque dans la zone de la douille de prolongement (40).

8. Marque souterraine suivant la revendication 7, caractérisée en ce que la douille de prolongement (40) est collée en place.

9. Marque souterraine suivant l'une quelconque des revendications 6 à 8, caractérisée en ce que le cône (14) présente, à son extrémité supérieure de plus grand diamètre, un diamètre supérieur à celui du boîtier (12) pour former un épaulement en forme de ressaut (30).

10. Marque souterraine suivant la revendication 7 ou 8, caractérisée en ce que le boîtier (12) et la douille de prolongement (40) présentent, sur leur face externe, des nervures (28) réparties sur leur périphérie.

11. Marque souterraine suivant la revendication 10, caractérisée en ce que les nervures (28) et le boîtier (12) sont de couleur différente.

12. Procédé pour fabriquer une marque souterraine suivant les revendications 4 et 5, suivant lequel un organe d'espacement (20) est fixé sur une extrémité d'un noyau de ferrite en forme de barre (16) et un condensateur (22), sur l'extrémité libre de l'organe d'espacement (20), au moyen d'une colle de contact, une bobine (18) connectée électriquement au condensateur (22) est montée sur le noyau (16) et est glissée dans une position dans laquelle le circuit oscillant, formé de la bobine (18) et du condensateur (22), oscille à la fréquence nominale, la bobine (18) est fixée dans cette position au moyen d'une colle de contact à action rapide, l'ensemble est glissé dans un boîtier (12), le noyau (16) sur lequel les bagues de caoutchouc (24) sont glissées est fixé dans le boîtier (12), ce boîtier est fermé par un bouchon (26) qui, d'une manière étanche à l'eau, est collé au moyen d'un adhésif ou soudé par ultrasons.

13. Procédé pour introduire une marque souterraine suivant les revendications 1 à 11 dans la terre, selon lequel un tube d'enfoncement (32) est glissé sur un boîtier (12), le cas échéant avec serrage, jusqu'à ce qu'il soit placé sur un épaulement en forme de ressaut (30), la marque souterraine est alors enfoncée ou battue dans la terre avec le tube d'enfoncement (32) jusqu'à la profondeur souhaitée et elle est ensuite refoulée hors de contact d'avec le tube d'enfoncement (32) au moyen d'un bâton.

FIG.1

FIG.2

FIG.3

FIG.4

FIG.5

FIG.6

FIG.7

FIG.8